# EUROPEAN PATENT SPECIFICATION

(11) **EP 3 987 222 B1**
(45) Date of publication and mention of the grant of the patent: **11.10.2023**
(21) Application number: 20736260.9
(22) Date of filing: 19.06.2020
(51) Int. Cl.: F21V 5/04, A47F 11/10, F21V 7/00, F21V 33/00, F21V 8/00, G09F 3/20, G09F 13/04, F21S 4/28, F21Y 115/10, F21W 131/405, F21Y 103/10

(54) **SHELF LAMP WITH ILLUMINATED IDENTIFICATION PLATE**
REGALLAMPE MIT BELEUCHTETER KENNZEICHENTAFEL
LAMPE D'ÉTAGÈRE À PLAQUE D'IDENTIFICATION ÉCLAIRÉE

(30) Priority: 20.06.2019 CN 201910538611
(43) Date of publication of application: 27.04.2022
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: YANG, Jun, Fujian 315103 (CN); HE, Zuping, Fujian 315103 (CN); DONG, Jianguo, Fujian 315103 (CN); XU, Kai, Fujian 315103 (CN); XU, Binjie, Fujian 315103 (CN)
(74) Representative: 2K Patentanwälte Blasberg Kewitz & Reichel
(86) International application number: PCT/EP2020/067237
(87) International publication number: WO 2020/254652

(56) References cited:
- EP-A1- 3 338 596
- WO-A1-2018/103237
- CN-A- 109 027 774
- CN-U- 208 997 721
- DE-A1- 3 612 296
- DE-C2- 3 612 296
- US-B1- 9 202 397

## Description

### RELATED APPLICATION

This application claims priority to a Chinese Patent Application No. CN 201910538611.4, filed on June 20, 2019.

### FIELD OF THE TECHNOLOGY

The present invention relates to the field of lighting technology, with particular emphasis on a shelf lamp with illuminated identification plate.

### BACKGROUND OF THE INVENTION

A large number of shelves to display the items being displayed are used in supermarkets, shopping malls, museums, exhibition halls and other places. In actual use, shelves are generally provided with at least two layers of shelves. The lighting between these layer boards generally comes from light sources in two directions, one is the light source on the top of buildings such as supermarkets, shopping malls, etc., and the other is the light source provided in each layer.

At the same time, in order to better display the goods or sign the price, the shelves are generally equipped with identification plates. In order to display the contents of the identification plates more clearly, the identification plates can also be set to emit light, such as energizing the identification plates or lighting them or using the electronic screen directly. No matter which method is used, it needs to be energized, and the common way to energize is to connect to the power supply through wires.

It can be seen that the above light sources and identification plates need to be energized. At this time, a lot of wires need to be provided to realize the energization, and the problem of wire entanglement will occur, which is neither beautiful nor safe. In order to solve the above problems, some researchers use a method of introducing part of the light into the identification plate, allowing part of the light to pass through to illuminate the lower shelf, and the other part of the light is reflected into the light guide plate, and then guided to the price tag by the light guide plate to realize that an LED light bar simultaneously lights up the three-dimensional space that needs lighting, such as the lower shelf shelves and price tags.

At the same time, in order to improve the lighting effect in the shelves, it is hoped that the goods can be illuminated with two lights up and down, but this setting needs to increase the number of light bars and increase the cost.

A shelf lamp according to the preamble of claim 1 is disclosed in CN 109027774 A.

### BRIEF SUMMARY OF THE INVENTION

In view of this, the present invention provides a shelf lamp with illuminated identification plate to solve the above technical problems.

A shelf lamp with illuminated identification plate, comprising:
mounting bracket;
strip-shaped light guide plate, set on the mounting bracket;
printed circuit board, fixed on one side of the strip-shaped light guide plate in the width direction;
light source, set on the light source mounting surface of the printed circuit board;
lamp cover, arranged outside the light source and connected to the mounting bracket;
optical assembly, disposed on the mounting bracket and located between the strip-shaped light guide plate and the light source, and used to guide part of the light from the light source to the strip-shaped light guide plate to make the surface of the strip-shaped light guide plate emit light to illuminate the identification plate;
the strip-shaped light guide plate, the optical assembly and the lamp cover (500) are integrally formed and manufactured.

The optical assembly is disposed on the mounting bracket and is located between the strip-shaped light guide plate and the light source. It is used to guide part of the light from the light source to the strip-shaped light guide plate to make the surface of the strip-shaped light guide plate emit light. To simplify the structure and facilitate manufacturing and installation, the strip-shaped light guide plate, optical assembly and lamp cover are integrally formed and manufactured, especially the extrusion molding method can be used, the manufacturing cost is low and the smoothness is good, so that the light output effect is improved, and the multi-color extrusion can also be used to adjust the color of the strip-shaped light guide plate, optical assembly and lamp cover according to different needs.

In order to improve the lighting effect and realize light emission on three sides, according to the invention, the optical assembly comprises:
a parallel light lens group, arranged on the side of the light source close to the strip-shaped light guide plate;
and a total reflection lens group, the total reflection lens group makes at least one total reflection of a part of the parallel light from the parallel light lens group to form a first parallel light parallel to the width direction of the strip-shaped light guide plate, and the first parallel light is incident on a first side of the strip-shaped light guide plate close to the light source to make a second side of the strip-shaped light guide plate diffuses light; meanwhile, the total reflection lens group simultaneously makes at least two total reflections of another part of parallel light from the parallel light lens group to form a second parallel light which is tilted at the width direction of the strip-shaped light guide plate, and the second parallel light enters the side of the strip-shaped light guide plate close to the light source to make the surface of the strip-shaped light guide plate emit light.

The optical assembly is used to guide part of the light from the light source into the strip-shaped light guide plate, on the one hand, the strip-shaped light guide plate emits light, and on the other hand, the opposite side of the light incident surface emits light, so as to achieve three-side lighting, and better lighting effect.
the parallel light lens group is provided in the lamp cover.
the lamp cover is a closed cavity in a plane perpendicular to the length direction of the printed circuit board.
the lamp cover and the optical assembly are combined to form a closed cavity.
the printed circuit board is disposed on one side of the back surface of the strip-shaped light guide plate in the width direction.
the printed circuit board is arranged in the lamp cover and divides it into a light exit area facing away from the strip-shaped light guide plate and an electrical element area (503) facing the strip-shaped light guide plate.
the light emitting direction of the light source faces away from the strip-shaped light guide plate.

According to the invention, the parallel light lens group includes at least one convex lens

According to the invention, the parallel light lens group includes a first convex lens disposed near the light source and a second convex lens disposed between the first convex lens and the total reflection lens group.
the total reflection lens group comprises:
a first total reflection surface, disposed on the side of the second convex lens away from the light source;
a second total reflection surface, disposed on the side of the first total reflection surface close to the strip-shaped light guide plate;
and a third total reflection surface, disposed on the opposite side of the second total reflection surface.
the second convex lens is connected to the third total reflection surface.
the lamp cover is a semi-closed structure, one end is connected to one side of the third total reflection surface close to the strip-shaped light guide plate and the other end is connected to the top of the second convex lens.
a light diffusion structure is provided on one side of the strip-shaped light guide plate away from the light source.
a plurality of strip-shaped light guide curved surfaces are provided on the back of the strip-shaped light guide plate, the strip-shaped light guide curved surfaces extend along the length direction of the strip-shaped light guide plate and are arranged parallel to each other along the width direction of the strip-shaped light guide plate.
the separation distance between adjacent light guide curved surfaces becomes smaller and smaller with the direction away from the light source.
the curvature of the light guide curved surface becomes larger and larger with the direction away from the light source.
the mounting bracket comprises:
   a shelf connecting piece, used for connecting the layer boards on the shelf;
   and a strip-shaped cavity, arranged on the shelf connecting piece, comprising a transparent front baffle and a rear baffle, and the strip-shaped light guide plate is disposed between the front baffle and the rear baffle.
   one side of the front baffle close to the optical assembly extends outward and bends toward the rear baffle to form a first fixing member, and one side of the rear baffle near the optical assembly is the second fixing member, the optical assembly and the lamp cover which are integrally manufactured are disposed between the first fixing member and the second fixing member.
   the shelf connecting piece is a clasp arranged outside the rear baffle.
   the clasp further comprises:
      an upper clasp plate, one end is fixed on the upper side of the rear baffle, and the other end is folded downward to form an upper clamping groove;
      a lower clasp plate, one end is fixed on the lower side of the rear baffle, and the other end is folded upward to form a lower clamping groove;
      and a fastening elastic sheet, one end is fixed on the outer side of the upper clasp plate, and the other end is folded downward and form an elastic clasp base with the upper clasp plate.

The shelf lamp with illuminated identification plate further comprising an identification plate clamping plate fixed on the outer surface of the front baffle.
the strip-shaped light guide plate is a diffusion plate added with a diffusing agent.
the lamp cover adopts a diffusion lamp cover,

### Technical effect of the invention:

The shelf lamp with illuminated identification plate of the present invention integrates the manufacturing of the lamp cover, optical element and light guide plate, which simplifies the structure, makes the structure more compact and is convenient for manufacturing and installation; in this case, three-sided light emitting is realized without increasing the number of light sources, which increases the irradiation range and improves the lighting effect.

### BRIEF DESCRIPTION OF THE DRAWINGS

The following describes embodiments of the present invention with reference to the accompanying drawings, in which:
FIG.1 is a schematic structural diagram of a shelf lamp with illuminated identification plate of the invention.
FIG.2 is a schematic view of the stereoscopic structure of the shelf lamp with illuminated identification plate of the invention.
FIG.3 is a schematic diagram of the explosion structure of the shelf lamp with illuminated identification plate of the invention.
FIG.4 is a schematic cross-sectional structural view of a shelf lamp with illuminated identification plate of the invention.
FIG.5 is a schematic diagram of the optical path of a shelf lamp with illuminated identification plate of the invention.
FIG.6 is a schematic cross-sectional structural view of another embodiment of a shelf lamp with illuminated identification plate of the invention.

### DETAILED DESCRIPTION OF THE INVENTION

Hereinafter, specific embodiments of the present invention will be described in further detail based on the drawings. It should be understood that the description of the embodiments of the present invention is not intended to limit the protection scope of the present invention.

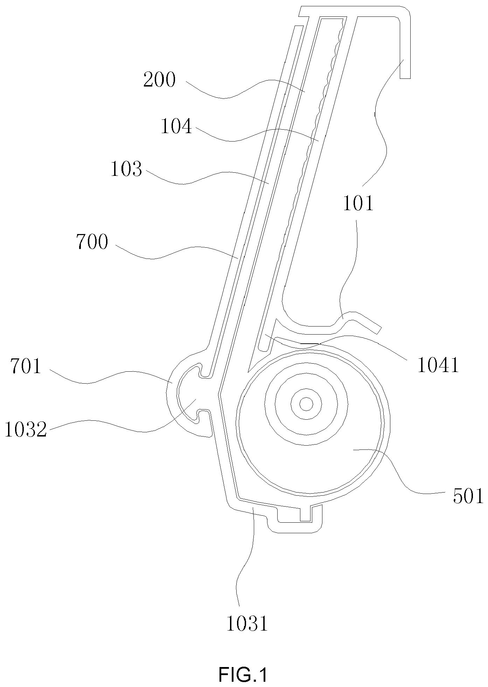

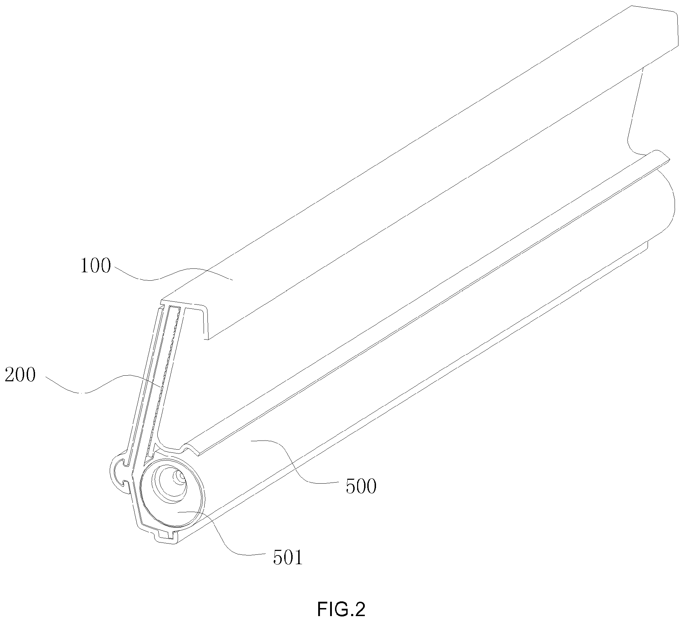

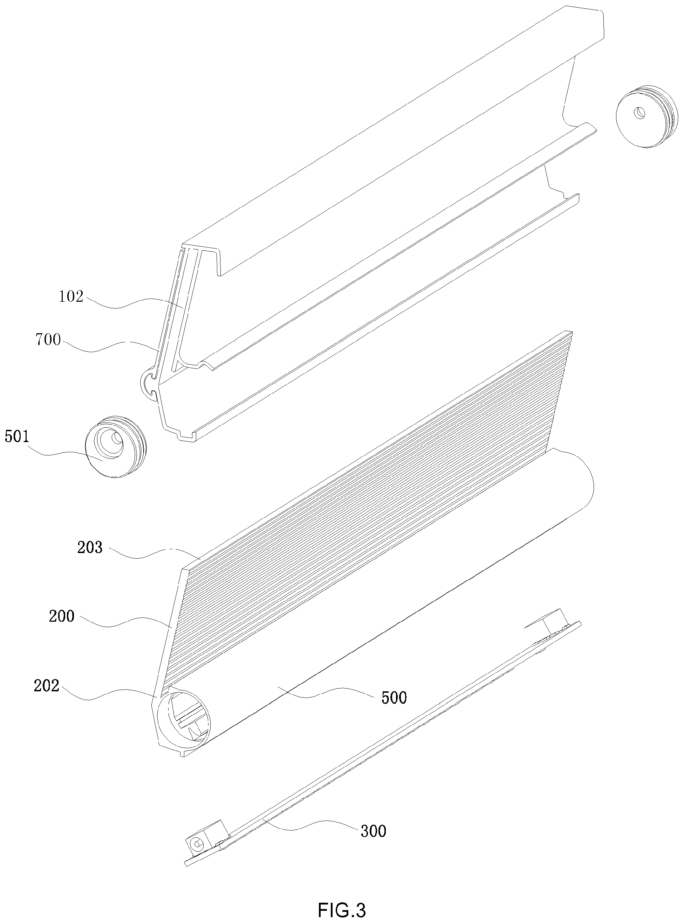

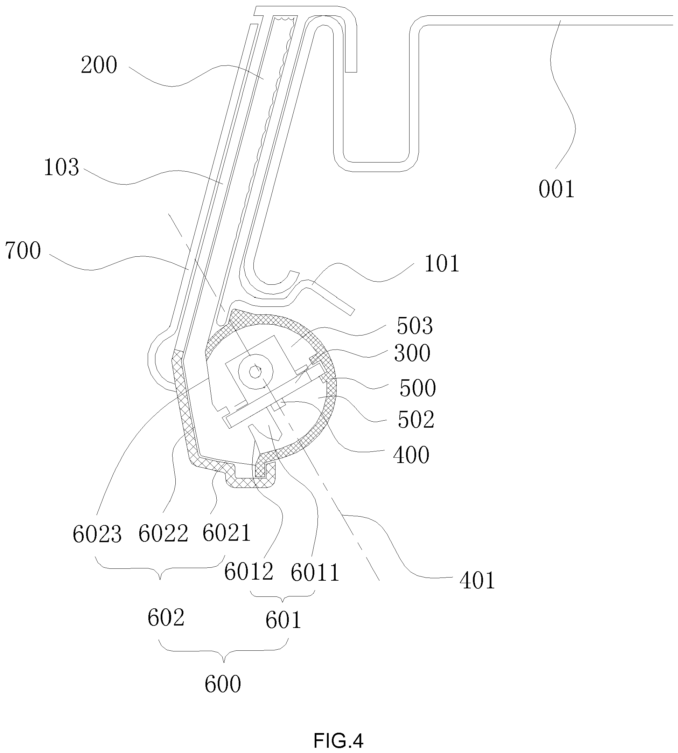

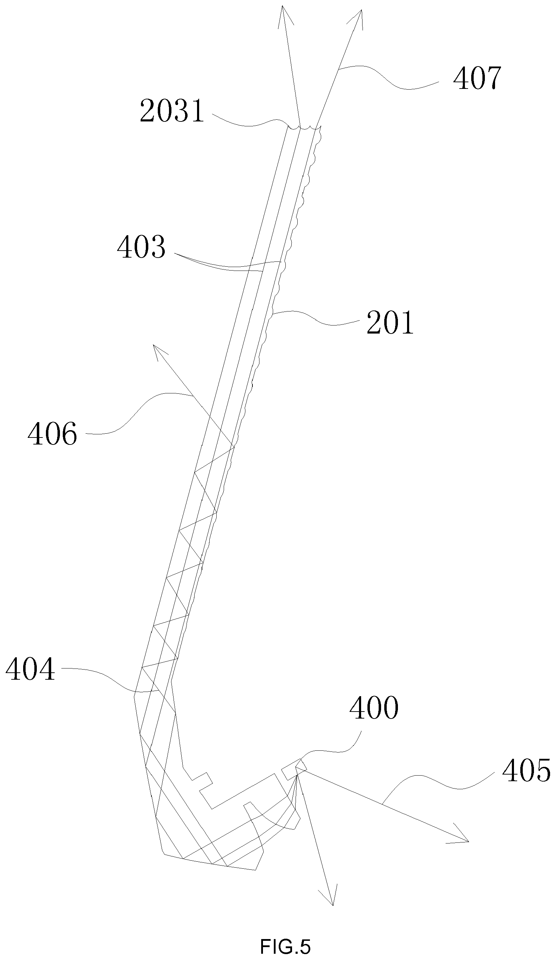

As shown in FIG.1 to 5, a shelf lamp with illuminated identification plate in this embodiment comprises a mounting bracket 100, a strip-shaped light guide plate 200, a printed circuit board 300, a light source 400, a lamp cover 500, and an optical assembly 600.

The mounting bracket 100 is used to install the shelf lamp to a shelf, a freezer, a showcase, etc., and can be fixedly connected by bolts, etc., or can be connected by a snap structure, or can be glued together. In order to facilitate installation and disassembly, in this embodiment the mounting bracket 100 includes a shelf connecting piece 101 and a strip-shaped cavity 102.

The shelf connecting piece 101 is used to connect the layer boards on the shelf 001, the plane where the layer board is located is a horizontal plane, and a bayonet structure for easy disassembly is used. The strip-shaped cavity 102 is arranged on the shelf connecting piece 101 and includes a transparent front baffle 103 and a rear baffle 104. The strip-shaped light guide plate 200 is disposed between the front baffle 103 and the rear baffle 104. The front baffle 103 and the rear baffle 104 can fix the strip-shaped light guide plate 200 on the one hand, and can protect the strip-shaped light guide plate 200 on the other hand. The transparent front baffle 103 transmits light and illuminates the identification plate fixed on its surface. To facilitate the fixing and replacement of the identification plate, the outer surface of the front baffle 103 is provided with a removable identification plate clamping plate 700, the two ends of the outer surface of the front baffle 103 are provided with raised clasp 1032, and the two ends of the identification plate clamping plate 700 are provided with a slot 701 that cooperates with the clasp 1032 to realize the fixing of the identification plate clamping plate 700 and the front baffle 103, and the identification plate is disposed between the identification plate clamping plate 700 and the front baffle 103.

The strip-shaped light guide plate 200 is used to illuminate the identification plate. The principle is the same as the prior art. The light guide plate is provided with light guide units on the back (bottom surface). The light emitted from the side light source stays on the surface of the light guide plate when the light emits to each light guide unit, the reflected light diffuses to all angles, and then the reflection conditions will be destroyed and the light will be emitted from the front of the light guide plate. The light guide plate can be illuminated uniformly through various light guide units with different density and different sizes. A reflective sheet can also be provided to reflect the light exposed on the back side to the light guide plate to improve the light use efficiency. The structure of the light guide unit is diverse. In order to facilitate processing, in this embodiment, the back of the strip-shaped light guide plate 200 is equipped with multiple strip-shaped light guide curved surfaces 201 which extend along the length direction of the strip-shaped light guide plate 200 and are arranged parallel to each other along the width direction of the strip-shaped light guide plate 200. In order to emit light uniformly on the front side, the separation distance between the adjacent light guide curved surfaces 201 becomes smaller and smaller as the direction away from the light source 400, and the curvature of the light guide curved surface 201 becomes larger and larger with the direction away from the light source 400.

The light source 400 is set on the printed circuit board 300, and the printed circuit board 300 is fixed on one side of the strip-shaped light guide plate 200 in the width direction. Specifically, the printed circuit board 300 is provided on one side of the rear surface of the strip-shaped light guide plate 200 in the width direction, which can be the upper side or the lower side. In this embodiment, the printed circuit board 300 is disposed on the lower side of the rear surface of the strip-shaped light guide plate 200 in the width direction. Advantageously, the angle between the optical axis 401 of the light source 400 and the strip-shaped light guide plate 200 is 30 ° ~ 90 °, and the angle of the optical axis 401 of the light source 400 inclining downward relative to the horizontal plane is 40 ° ~ 80 °. This is because the identification plate is generally placed on the outermost side of the layer board, and the light source 400 needs to illuminate the inner side of the layer board. Therefore, the light source 400 is disposed on the light source mounting surface of the printed circuit board 300, and the light emitting direction faces away from the strip-shaped light guide plate 200 to form light rays 405 for illuminating the layer board from top to bottom.

The lamp cover 500 is disposed outside the light source 400 and connected to the mounting bracket 100. The lamp cover 500 can play a role of sealing and protection, and can also play a role of uniform light. There are also sealed end caps 501 on both sides of the lamp cover.

The optical assembly 600 guides part of the light of the light source 400 into the strip-shaped light guide plate 200, on the one hand, the strip-shaped light guide plate 200 emits light, and on the other hand, the opposite side of the incident surface emits light, thereby realizing three-side lighting and better lighting effect. The optical assembly 600 is disposed on the mounting bracket 100 and is located between the strip-shaped light guide plate 200 and the light source 400, and guides part of the light from the light source 400 to the strip-shaped light guide plate 200 to make the surface of the strip-shaped light guide plate 200 emit light. In order to simplify the structure and make it easy to manufacture and install, the strip-shaped light guide plate 200, the optical assembly 600 and the lamp cover 500 are integrally formed and manufactured. Especially the extrusion molding method can be used, the manufacturing cost is low and the smoothness is good, and then the luminous effect is improved. Multi-color extrusion also can be used to adjust the colors of the strip-shaped light guide plate 200, the optical assembly 600, and the lamp cover 500 according to different needs.

The lamp cover 500 adopts a diffusion lamp cover, and the strip-shaped light guide plate 200 is a diffusion plate added with a diffusing agent, which can destroy the refraction angle of part of the light, so that the light emitting effect of the front side of the strip-shaped light guide plate 200 is more uniform, and the top surface achieves the light emitting effect of the line light source. Specifically, the ratio of the diffusing agent in the strip-shaped light guide plate 200 is 0.2 to 1 g / kg.

The optical assembly 600 is preferably made of a transparent material, and the light transmittance of the strip-shaped light guide plate 200 is higher than that of the lamp cover 800. Therefore, the three-color extrusion technology is needed in the unibody molding. For the convenience of manufacturing, the optical assembly 600 can be made of the same material as the strip-shaped light guide plate 200, and at this time, it only needs two-color extrusion to complete the integral molding manufacturing.

In order to facilitate installation and manufacturing, in this embodiment, the side of the front baffle 103 near the optical assembly 600 extends outward and bends toward the rear baffle 104 to form a first fixing member 1031, and one side of the rear baffle 104 near the optical assembly 600 is the second fixing member 1041, the optical assembly 600 and the lamp cover 500 which are integrally manufactured are arranged between the first fixing member 1031 and the second fixing member 1041, and the shelf connecting piece 101 is a clasp arranged outside the rear baffle 104.

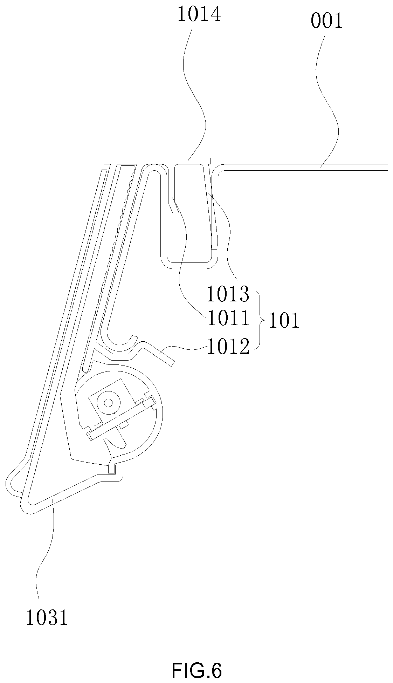

The first fixing member 1031 is disposed against the optical assembly 400 and the lamp cover 500, or can extend downward to form a V-shaped structure, which can prevent glare, as shown in FIG. 6.

In order to improve the reliability of fixing, the clasp further includes: an upper clasp plate 1011, a lower clasp plate 1012, and a fastening elastic sheet 1013; one end of the upper clasp plate 1011 is fixed on the upper side of the rear baffle 104, and the other end is folded downward to form an upper clamping groove; one end of the lower clasp plate 1012 is fixed to the lower side of the rear baffle 104, and the other end is folded upward to form a lower clamping groove; fastening elastic sheet 1013, one end is fixed to the outside of the upper clasp plate 1011, and the other end is folded downward and form an elastic clasp base 1014 with the upper clasp plate 1011. The elastic clasp base 1014 can prevent the upper clamping groove from coming out, as shown in FIG. 6.

In order to realize the light guiding function of the optical assembly 600, the optical assembly 600 includes a parallel light lens group 601 and a total reflection lens group 602. The parallel light lens group 601 is disposed on the side of the light source 400 close to the strip-shaped light guide plate 200. The parallel light lens group 601 functions to organize the light from the side of the light source 400 close to the strip-shaped light guide plate 200 into parallel light. The parallel light here is not refers to absolute parallel, but relative, which can make this part of the light enter the strip-shaped light guide plate 200 in parallel and exit on the opposite side of the light incident surface. Specifically, the total reflection lens group 602 makes at least one total reflection of a part of the parallel light from the parallel light lens group 601 to form a first parallel light 403 parallel to the width direction of the strip-shaped light guide plate 200, and the first parallel light 403 is incident on a first side 202 of the strip-shaped light guide plate 200 close to the light source 400 to make a second side 203 of the strip-shaped light guide plate 200 diffuses light to form light 407 and illuminate the goods on the floor from bottom to top. In this embodiment, two total reflections are performed.

The total reflection lens group 602 simultaneously makes at least two total reflections of another part of parallel light from the parallel light lens group 601 to form a second parallel light 404 which is tilted at the width direction of the strip-shaped light guide plate 200. and the second parallel light 404 enters the side of the strip-shaped light guide plate 200 close to the light source 400 to make the surface of the strip-shaped light guide plate 200 emit light to form light rays 406. In this embodiment, three total reflections are performed.

For the compactness of the structure, in this embodiment, the parallel light lens group 601 is provided in the lamp cover 500. In order to improve the sealing and waterproofing effect, the lamp cover 500 is a closed cavity in a plane perpendicular to the length direction of the printed circuit board 300. It is further preferred that the lamp cover 500 and the optical assembly 600 form a closed cavity. In this embodiment, the closed cavity is a cylindrical structure.

The printed circuit board 300 is disposed in the lamp cover 500 and divides it into a light exit area 502 facing away from the strip-shaped light guide plate 200 and an electrical element area 503 facing the strip-shaped light guide plate 200. In this embodiment, the printed circuit board 300 is installed by providing a slot.

The purpose of the parallel light lens group 601 is to form parallel light, which is generally realized by convex lens, including at least one convex lens. Specifically, the parallel light lens group 601 includes a first convex lens 6011 disposed near the light source 400 and a second convex lens 6012 disposed between the first convex lens 6011 and the total reflection lens group 602.

The total reflection lens group 602 includes a first total reflection surface 6021, a second total reflection surface 6022, and a third total reflection surface 6023.

The first total reflection surface 6021 is disposed on the side of the second convex lens 6012 away from the light source 400, the second total reflection surface 6022 is disposed on the side of the first total reflection surface 6021 near the strip-shaped light guide plate 200, and the third total reflection surface 6023 is set on the opposite side of the second total reflection surface 6022.

In order to make the structure more compact, the second convex lens 6012 is connected to the third total reflection surface 6023. In this embodiment, the lamp cover 500 has a semi-closed structure, one end is connected to the side of the third total reflection surface 6023 close to the strip-shaped light guide plate 200, and the other end is connected to the top of the second convex lens 6012.

In order to make the second side 203 of the strip-shaped light guide plate 200 away from the light source 400 have a larger illumination range, a light diffusion structure 2031 is provided. Specifically, in this embodiment, the light diffusion structure 2031 uses a plurality of side-by-side concave lenses, which is convenient for manufacturing and controlling diffusion angle.

The above disclosure has been described by way of example and in terms of exemplary embodiment, and it is to be understood that the disclosure is not limited thereto.

## Claims

1. A shelf lamp with illuminated identification plate, comprising:
mounting bracket (100);
strip-shaped light guide plate (200), set on the mounting bracket (100);
printed circuit board (300), fixed on one side of the strip-shaped light guide plate (200) in the width direction;
light source (400), set on the light source mounting surface of the printed circuit board (300);
lamp cover (500), arranged outside the light source (400) and connected to the mounting bracket (100);
optical assembly (600), disposed on the mounting bracket (100) and located between the strip-shaped light guide plate (200) and the light source (400), and used to guide part of the light from the light source (400) to the strip-shaped light guide plate (200) to make the surface of the strip-shaped light guide plate (200) emit light to illuminate the identification plate;
wherein, the strip-shaped light guide plate (200), the optical assembly (600) and the lamp cover (500) are integrally formed and manufactured.
wherein the optical assembly (600) comprises:
a parallel light lens group (601), arranged on the side of the light source (400) close to the strip-shaped light guide plate (200);
and a total reflection lens group (602), the total reflection lens group (602) makes at least one total reflection of a part of the parallel light from the parallel light lens group (601) to form a first parallel light (403) parallel to the width direction of the strip-shaped light guide plate (200), and the first parallel light (403) is incident on a first side (202) of the strip-shaped light guide plate (200) close to the light source (400) to make a second side (203) of the strip-shaped light guide plate (200) diffuses light; meanwhile, the total reflection lens group (602) simultaneously makes at least two total reflections of another part of parallel light from the parallel light lens group (601) to form a second parallel light (404) which is tilted at the width direction of the strip-shaped light guide plate (200), and the second parallel light (404) enters the side of the strip-shaped light guide plate (200) close to the light source (400) to make the surface of the strip-shaped light guide plate (200) emit light,
wherein the parallel light lens group (601) includes at least one convex lens,
**Characterized in that**
the parallel light lens group (601) includes a first convex lens (6011) disposed near the light source (400) and a second convex lens (6012) disposed between the first convex lens (6011) and the total reflection lens group (602).

2. The shelf lamp with illuminated identification plate as claimed in claim 1, wherein the parallel light lens group (601) is provided in the lamp cover (500).
and preferably, wherein the lamp cover (500) is a closed cavity in a plane perpendicular to the length direction of the printed circuit board (300).
and preferably wherein the lamp cover (500) and the optical assembly (600) are combined to form a closed cavity.

3. The shelf lamp with illuminated identification plate as claimed in any of the claims 1 to 2, wherein the printed circuit board (300) is disposed on one side of the back surface of the strip-shaped light guide plate (200) in the width direction.

4. The shelf lamp with illuminated identification plate as claimed in any of the claims 1 to 3, wherein the printed circuit board (300) is arranged in the lamp cover (500) and divides it into a light exit area (502) facing away from the strip-shaped light guide plate (200) and an electrical element area (503) facing the strip-shaped light guide plate (200).

5. The shelf lamp with illuminated identification plate as claimed in any of the claims 1 to 4, wherein the light emitting direction of the light source (400) faces away from the strip-shaped light guide plate (200).

6. The shelf lamp with illuminated identification plate as claimed in claim 1, wherein the total reflection lens group (602) comprises:
a first total reflection surface (6021), disposed on the side of the second convex lens (6011) away from the light source (400);
a second total reflection surface (6022), disposed on the side of the first total reflection surface (6021) close to the strip-shaped light guide plate (200);
and a third total reflection surface (6023), disposed on the opposite side of the second total reflection surface (6022).
and preferably , wherein the second convex lens (6012) is connected to the third total reflection surface (6023)
preferably wherein the lamp cover (500) is a semi-closed structure, one end is connected to one side of the third total reflection surface (6023) close to the strip-shaped light guide plate (200) and the other end is connected to the top of the second convex lens (6012).

7. The shelf lamp with illuminated identification plate as claimed in any of the claims 1 to 6, wherein a light diffusion structure is provided on one side of the strip-shaped light guide plate (200) away from the light source (400).

8. The shelf lamp with illuminated identification plate as claimed in any of the claims 1 to 7, wherein a plurality of strip-shaped light guide curved surfaces (201) are provided on the back of the strip-shaped light guide plate (200), the strip-shaped light guide curved surfaces (201) extend along the length direction of the strip-shaped light guide plate (200) and are arranged parallel to each other along the width direction of the strip-shaped light guide plate (200).
and preferably wherein the separation distance between adjacent light guide curved surfaces (201) becomes smaller and smaller with the direction away from the light source (400).

9. The shelf lamp with illuminated identification plate as claimed in claim 8, wherein the curvature of the light guide curved surface (201) becomes larger and larger with the direction away from the light source (400).

10. The shelf lamp with illuminated identification plate as claimed in any one of claims 1 to 9, wherein the mounting bracket (100) comprises:
a shelf connecting piece (101), used for connecting the layer boards on the shelf (001);
and a strip-shaped cavity (102), arranged on the shelf connecting piece (101), comprising a transparent front baffle (103) and a rear baffle (104), and the strip-shaped light guide plate (200) is disposed between the front baffle (103) and the rear baffle (104).

11. The shelf lamp with illuminated identification plate as claimed in claim 10, wherein one side of the front baffle (103) close to the optical assembly (600) extends outward and bends toward the rear baffle ( 104) to form a first fixing member (1031), and one side of the rear baffle (104) near the optical assembly (600) is the second fixing member (1041), the optical assembly (600) and the lamp cover (500) which are integrally manufactured are disposed between the first fixing member (1031) and the second fixing member (1041),
preferably wherein the shelf connecting piece (101) is a clasp arranged outside the rear baffle (104).

12. The shelf lamp with illuminated identification plate as claimed in claim 11, wherein the clasp further comprises:
an upper clasp plate (1011), one end is fixed on the upper side of the rear baffle (104), and the other end is folded downward to form an upper clamping groove;
a lower clasp plate (1012), one end is fixed on the lower side of the rear baffle (104), and the other end is folded upward to form a lower clamping groove;
and a fastening elastic sheet (1013), one end is fixed on the outer side of the upper clasp plate (1011), and the other end is folded downward and form an elastic clasp base (1014) with the upper clasp plate (1011).

13. The shelf lamp with illuminated identification plate as claimed in any of the claims 10 to 12, further comprising an identification plate clamping plate (700) fixed on the outer surface of the front baffle (103).

14. The shelf lamp with illuminated identification plate as claimed in any one of claims 1 to 13, wherein the strip-shaped light guide plate (200) is a diffusion plate added with a diffusing agent.

15. The shelf lamp with illuminated identification plate as claimed in any one of claims 1 to 14, wherein the lamp cover (500) adopts a diffusion lamp cover.

## Patentansprüche

1. Eine Regalleuchte mit beleuchtetem Identifikationsschild, bestehend aus:
Halterung (100);
eine streifenförmige Lichtleiterplatte (200), die auf den Montagebügel (100) gesetzt wird;
Leiterplatte (300), die auf einer Seite der streifenförmigen Lichtleiterplatte (200) in der Breitenrichtung befestigt ist;
Lichtquelle (400), die auf der Montagefläche der Lichtquelle auf der Leiterplatte (300) angebracht ist;
Lampenabdeckung (500), die außerhalb der Lichtquelle (400) angeordnet und mit der Halterung (100) verbunden ist;
optische Baugruppe (600), die an der Montagehalterung (100) angeordnet ist und sich zwischen der streifenförmigen Lichtleiterplatte (200) und der Lichtquelle (400) befindet und dazu dient, einen Teil des Lichts von der Lichtquelle (400) zu der streifenförmigen Lichtleiterplatte (200) zu leiten, um die Oberfläche der streifenförmigen Lichtleiterplatte (200) dazu zu bringen, Licht zu emittieren, um die Identifikationsplatte zu beleuchten;
wobei die streifenförmige Lichtleiterplatte (200), die optische Baugruppe (600) und die Lampenabdeckung (500) einstückig geformt und hergestellt sind,
wobei die optische Anordnung (600) umfasst:
eine parallele Lichtlinsengruppe (601), die auf der Seite der Lichtquelle (400) nahe der streifenförmigen Lichtleiterplatte (200) angeordnet ist;
und eine Totalreflexionslinsengruppe (602), wobei die Totalreflexionslinsengruppe (602) mindestens eine Totalreflexion eines Teils des parallelen Lichts von der Parallellichtlinsengruppe (601) vornimmt, um ein erstes paralleles Licht (403) parallel zur Breitenrichtung der streifenförmigen Lichtleiterplatte (200) zu bilden, und das erste parallele Licht (403) auf eine erste Seite (202) der streifenförmigen Lichtleiterplatte (200) nahe der Lichtquelle (400) auftrifft, um eine zweite Seite (203) der streifenförmigen Lichtleiterplatte (200) lichtstreuend zu machen; in der Zwischenzeit macht die Totalreflexionslinsengruppe (602) gleichzeitig mindestens zwei Totalreflexionen eines anderen Teils des parallelen Lichts von der Parallellichtlinsengruppe (601), um ein zweites paralleles Licht (404) zu bilden, das in der Breitenrichtung der streifenförmigen Lichtleiterplatte (200) geneigt ist, und das zweite parallele Licht (404) tritt in die Seite der streifenförmigen Lichtleiterplatte (200) nahe der Lichtquelle (400) ein, um zu bewirken, dass die Oberfläche der streifenförmigen Lichtleiterplatte (200) Licht emittiert,
wobei die parallele Lichtlinsengruppe (601) mindestens eine konvexe Linse enthält,
**gekennzeichnet dadurch, dass** die parallele Lichtlinsengruppe (601) eine erste konvexe Linse (6011), die nahe der Lichtquelle (400) angeordnet ist, und eine zweite konvexe Linse (6012), die zwischen der ersten konvexen Linse (6011) und der Totalreflexionslinsengruppe (602) angeordnet ist, umfasst.

2. Die Regalleuchte mit beleuchtetem Identifikationsschild nach Anspruch 1, wobei die parallele Lichtlinsengruppe (601) in der Lampenabdeckung (500) vorgesehen ist
und vorzugsweise, wobei die Lampenabdeckung (500) ein geschlossener Hohlraum in einer Ebene senkrecht zur Längsrichtung der Leiterplatte (300) ist,
und vorzugsweise dadurch, dass die Lampenabdeckung (500) und die optische Baugruppe (600) so kombiniert sind, dass sie einen geschlossenen Hohlraum bilden.

3. Die Regalleuchte mit beleuchtetem Identifikationsschild nach einem der Ansprüche 1 bis 2, wobei die Leiterplatte (300) auf einer Seite der in Breitenrichtung hinteren Fläche der streifenförmigen Lichtleiterplatte (200) angeordnet ist.

4. Die Regalleuchte mit beleuchtetem Identifikationsschild nach einem der Ansprüche 1 bis 3, wobei die Leiterplatte (300) in der Lampenabdeckung (500) angeordnet ist und diese in einen der streifenförmigen Lichtleiterplatte (200) abgewandten Lichtaustrittsbereich (502) und einen der streifenförmigen Lichtleiterplatte (200) zugewandten elektrischen Elementbereich (503) unterteilt.

5. Die Regalleuchte mit beleuchtetem Identifikationsschild nach einem der Ansprüche 1 bis 4, wobei die Lichtabstrahlrichtung der Lichtquelle (400) von der streifenförmigen Lichtleiterplatte (200) wegweist.

6. Die Regalleuchte mit beleuchtetem Identifikationsschild nach Anspruch 1, wobei die Totalreflexionslinsengruppe (602) umfasst:
eine erste Totalreflexionsfläche (6021), die auf der von der Lichtquelle (400) abgewandten Seite der zweiten konvexen Linse (6011) angeordnet ist;
eine zweite Totalreflexionsfläche (6022), die auf der Seite der ersten Totalreflexionsfläche (6021) nahe der streifenförmigen Lichtleiterplatte (200) angeordnet ist;
und eine dritte Totalreflexionsfläche (6023), die auf der gegenüberliegenden Seite der zweiten Totalreflexionsfläche (6022) angeordnet ist;
und vorzugsweise, wobei die zweite konvexe Linse (6012) mit der dritten Totalreflexionsfläche (6023) verbunden ist, wobei die Lampenabdeckung (500) vorzugsweise eine halbgeschlossene Struktur ist, ein Ende mit einer Seite der dritten Totalreflexionsfläche (6023) nahe der streifenförmigen Lichtleiterplatte (200) und das andere Ende mit der Oberseite der zweiten konvexen Linse (6012) verbunden ist.

7. Die Regalleuchte mit beleuchtetem Identifikationsschild nach einem der Ansprüche 1 bis 6, wobei auf einer von der Lichtquelle abgewandten Seite der streifenförmigen Lichtleiterplatte (200) eine Lichtstreustruktur vorgesehen ist.

8. Die Regalleuchte mit beleuchtetem Identifikationsschild nach einem der Ansprüche 1 bis 7, wobei auf der Rückseite der streifenförmigen Lichtleiterplatte (200) mehrere streifenförmige Lichtleiterkrümmungen (201) vorgesehen sind, die sich in Längsrichtung der streifenförmigen Lichtleiterplatte (200) erstrecken und in Breitenrichtung der streifenförmigen Lichtleiterplatte (200) parallel zueinander angeordnet sind,
und vorzugsweise, indem der Abstand zwischen benachbarten gekrümmten Lichtleiterflächen (201) mit der Richtung von der Lichtquelle (400) weg immer kleiner wird.

9. Die Regalleuchte mit beleuchtetem Identifikationsschild nach Anspruch 8, wobei die Krümmung der gekrümmten Lichtleiterfläche (201) mit zunehmender Entfernung von der Lichtquelle (400) immer größer wird.

10. Die Regalleuchte mit beleuchtetem Identifikationsschild nach einem der Ansprüche 1 bis 9, wobei die Halterung (100) umfasst:
ein Regalverbindungsstück (101), das zum Verbinden der Schichtplatten auf dem Regal (001) verwendet wird; und einen streifenförmigen Hohlraum (102), der auf dem Regalverbindungsstück (101) angeordnet ist und eine transparente vordere Ablenkplatte (103) und eine hintere Ablenkplatte (104) umfasst, wobei die streifenförmige Lichtleiterplatte (200) zwischen der vorderen Ablenkplatte (103) und der hinteren Ablenkplatte (104) angeordnet ist.

11. Die Regalleuchte mit beleuchtetem Identifikationsschild nach Anspruch 10, wobei eine Seite der vorderen Blende (103) nahe der optischen Baugruppe (600) sich nach außen erstreckt und zur hinteren Blende (104) gebogen ist, um ein erstes Befestigungselement (1031) zu bilden, und eine Seite der hinteren Blende (104) nahe der optischen Baugruppe (600) das zweite Befestigungselement (1041) ist, die optische Baugruppe (600) und die Lampenabdeckung (500), die einstückig hergestellt sind, zwischen dem ersten Befestigungselement (1031) und dem zweiten Befestigungselement (1041) angeordnet sind, wobei das Regalverbindungsstück (101) vorzugsweise eine außerhalb der hinteren Blende (104) angeordnete Klammer ist.)

12. Die Regalleuchte mit beleuchtetem Kennzeichnungsschild nach Anspruch 11, wobei die Klammer weiterhin umfasst:
eine obere Klemmplatte (1011), deren eines Ende an der Oberseite der hinteren Schallwand (104) befestigt ist und deren anderes Ende nach unten gefaltet ist, um eine obere Klemmrille zu bilden;
eine untere Klemmplatte (1012), deren eines Ende an der Unterseite der hinteren Schallwand (104) befestigt ist und deren anderes Ende nach oben gefaltet ist, um eine untere Klemmrille zu bilden;
und einer elastischen Befestigungsfolie (1012), wobei ein Ende an der Außenseite der oberen Verschlussplatte (1011) befestigt ist und das andere Ende nach unten gefaltet ist und mit der oberen Verschlussplatte (1011) eine elastische Verschlussbasis (1014) bildet.

13. Die Regalleuchte mit beleuchtetem Identifikationsschild nach einem der Ansprüche 10 bis 12, die ferner eine an der Außenfläche der vorderen Blende (103) befestigte Identifikationsschild-Klemmplatte (700) aufweist

14. Die Regalleuchte mit beleuchtetem Identifikationsschild nach einem der Ansprüche 1 bis 13, wobei die streifenförmige Lichtleiterplatte (200) eine mit einem Streumittel versehene Streuscheibe ist.

15. Die Regalleuchte mit beleuchtetem Identifikationsschild nach einem der Ansprüche 1 bis 14, wobei die Lampenabdeckung (500) eine Diffusionslampenabdeckung ist.

## Revendications

1. Un luminaire pour étagère avec panneau d'identification éclairé, comprenant
support (100) ;
une plaque de fibres optiques en forme de bande (200) qui est placée sur l'étrier de montage (100) ;
plaquette de circuits imprimés (300) fixée sur un côté de la plaquette de fibres optiques en forme de bande (200) dans le sens de la largeur ;
source de lumière (400) montée sur la surface de montage de la source de lumière sur la carte de circuit imprimé (300) ;
Couvercle de lampe (500) disposé à l'extérieur de la source de lumière (400) et relié au support (100) ;
un ensemble optique (600) disposé sur le support de montage (100) et situé entre la plaque de guidage de lumière en forme de bande (200) et la source de lumière (400) et servant à guider une partie de la lumière de la source de lumière (400) vers la plaque de guidage de lumière en forme de bande (200) pour amener la surface de la plaque de guidage de lumière en forme de bande (200) à émettre de la lumière afin d'éclairer la plaque d'identification ;
dans lequel la plaque de guide de lumière en forme de bande (200), l'ensemble optique (600) et le couvercle de lampe (500) sont moulés et fabriqués en une seule pièce, dans lequel l'ensemble optique (600) comprend
un groupe de lentilles lumineuses parallèles (601) disposé sur le côté de la source de lumière (400) à proximité de la plaque de guidage de lumière en forme de bande (200) ; et un groupe de lentilles à réflexion totale (602), le groupe de lentilles à réflexion totale (602) effectuant au moins une réflexion totale d'une partie de la lumière parallèle provenant du groupe de lentilles lumineuses parallèles (601) afin de former une première lumière parallèle (403) parallèle à la direction de la largeur de la plaque de guidage de lumière en forme de bande (200), et la première lumière parallèle (403) est incidente sur un premier côté (202) de la plaque de guide de lumière en forme de bande (200) à proximité de la source de lumière (400) afin de diffuser la lumière sur un deuxième côté (203) de la plaque de guide de lumière en forme de bande (200) ; pendant ce temps, le groupe de lentilles à réflexion totale (602) fait simultanément au moins deux réflexions totales d'une autre partie de la lumière parallèle provenant du groupe de lentilles à lumière parallèle (601) pour former une deuxième lumière parallèle (404), qui est inclinée dans le sens de la largeur de la plaque de guidage de lumière en forme de bande (200), et la deuxième lumière parallèle (404) entre dans le côté de la plaque de guidage de lumière en forme de bande (200) proche de la source de lumière (400) pour faire en sorte que la surface de la plaque de guidage de lumière en forme de bande (200) émette de la lumière,
dans lequel le groupe de lentilles lumineuses parallèles (601) comprend au moins une lentille convexe,
**caractérisé en ce que** le groupe de lentilles de lumière parallèle (601) comprend une première lentille convexe (6011) disposée près de la source de lumière (400) et une seconde lentille convexe (6012) disposée entre la première lentille convexe (6011) et le groupe de lentilles à réflexion totale (602).

2. Le luminaire pour étagère avec étiquette d'identification éclairée selon la
revendication 1, dans lequel le groupe de lentilles lumineuses parallèles (601) est prévu dans le couvercle de lampe (500)
et de préférence, dans lequel le couvercle de lampe (500) est une cavité fermée dans un plan perpendiculaire à la direction longitudinale de la carte de circuit imprimé (300), et de préférence en ce que le couvercle de lampe (500) et l'ensemble optique (600) sont combinés de manière à former une cavité fermée.

3. Le luminaire pour étagère avec plaque d'identification éclairée selon l'une des revendications 1 à 2, dans lequel la carte de circuit imprimé (300) est disposée sur un côté de la surface arrière, dans le sens de la largeur, de la plaque de guidage de lumière en forme de bande (200).

4. Le luminaire pour étagère avec plaque d'identification éclairée selon l'une des revendications 1 à 3, dans lequel le circuit imprimé (300) est disposé dans le couvercle de lampe (500) et divise celui-ci en une zone de sortie de lumière (502) opposée à la plaque de guidage de lumière en forme de bande (200) et une zone d'élément électrique (503) tournée vers la plaque de guidage de lumière en forme de bande (200).

5. Le luminaire pour étagère avec étiquette d'identification éclairée selon l'une des revendications 1 à 4, dans lequel la direction d'émission de lumière de la source lumineuse (400) est orientée à l'opposé de la plaque de guidage de lumière (200) en forme de bande.

6. Le luminaire pour étagère avec étiquette d'identification éclairée selon la revendication 1, dans lequel le groupe de lentilles à réflexion totale (602) comprend :
une première surface de réflexion totale (6021) qui est disposée sur le côté de la deuxième lentille convexe (6011) opposé à la source de lumière (400) ;
une seconde surface de réflexion totale (6022) disposée sur le côté de la première surface de réflexion totale (6021) à proximité de la plaque de guidage de lumière en forme de bande (200) ;
et une troisième surface de réflexion totale (6023) disposée sur le côté opposé à la deuxième surface de réflexion totale (6022) ;
et de préférence, ladite deuxième lentille convexe (6012) étant reliée à ladite troisième surface de réflexion totale (6023), ledit couvercle de lampe (500) étant de préférence une structure semi-fermée, une extrémité étant reliée à un côté de ladite troisième surface de réflexion totale (6023) proche de ladite plaque de guidage de lumière en forme de bande (200) et l'autre extrémité étant reliée au côté supérieur de ladite deuxième lentille convexe (6012).

7. Le luminaire pour étagère avec plaque d'identification éclairée selon l'une des revendications 1 à 6, dans lequel une structure de diffusion de la lumière est prévue sur un côté de la plaque de guidage de la lumière (200) en forme de bande qui est éloigné de la source lumineuse.

8. Le luminaire pour étagère avec plaque d'identification éclairée selon l'une des revendications 1 à 7, dans lequel plusieurs courbures de guide de lumière en forme de bande (201) sont prévues sur la face arrière de la plaque de guide de lumière en forme de bande (200), lesquelles s'étendent dans la direction longitudinale de la plaque de guide de lumière en forme de bande (200) et sont disposées parallèlement les unes aux autres dans la direction de la largeur de la plaque de guide de lumière en forme de bande (200),
et, de préférence, en réduisant de plus en plus la distance entre des surfaces de guide de lumière courbes voisines (201) au fur et à mesure que l'on s'éloigne de la source de lumière (400).

9. Le luminaire pour étagère avec étiquette d'identification éclairée selon la revendication 8, dans lequel la courbure de la surface courbe du guide de lumière (201) augmente au fur et à mesure que l'on s'éloigne de la source de lumière (400).

10. Le luminaire pour étagère avec étiquette d'identification éclairée selon l'une quelconque des revendications 1 à 9, dans lequel le support (100) comprend :
un connecteur d'étagère (101) utilisé pour connecter les plaques stratifiées sur l'étagère (001) ; et une cavité en forme de bande (102) disposée sur le connecteur d'étagère (101) et comprenant une plaque de déviation avant transparente (103) et
une plaque de déviation arrière (104), la plaque de guidage de lumière en forme de bande (200) étant disposée entre la plaque de déviation avant (103) et la plaque de déviation arrière (104).

11. Le luminaire pour étagère avec étiquette d'identification éclairée selon la revendication 10, dans laquelle un côté du panneau avant (103) proche de l'ensemble optique (600) s'étend vers l'extérieur et est plié vers le panneau arrière (104) pour former un premier élément de fixation (1031), et un côté du panneau arrière (104) proche de l'ensemble optique (600) est le deuxième élément de fixation (1041), l'ensemble optique (600) et le couvercle de lampe (500), qui sont fabriqués d'un seul tenant, sont placés entre le premier élément de fixation (1031) et le deuxième élément de fixation (1041), le connecteur d'étagère (101) étant de préférence une pince placée à l'extérieur du panneau arrière (104).)

12. Le luminaire pour étagère avec plaque d'identification éclairée selon la revendication 11, la pince comprenant en outre :
une plaque de serrage supérieure (1011) dont une extrémité est fixée à la face supérieure du baffle arrière (104) et dont l'autre extrémité est repliée vers le bas pour former une rainure de serrage supérieure ;
une plaque de serrage inférieure (1012) dont une extrémité est fixée à la face inférieure du baffle arrière (104) et dont l'autre extrémité est repliée vers le haut pour former une rainure de serrage inférieure ;
et une feuille de fixation élastique (1012), une extrémité étant fixée à l'extérieur de la plaque de fermeture supérieure (1011) et l'autre extrémité étant pliée vers le bas et formant une base de fermeture élastique (1014) avec la plaque de fermeture supérieure (1011).

13. Le luminaire pour étagère avec étiquette d'identification éclairée selon l'une quelconque des revendications 10 à 12, qui comprend en outre une plaque de serrage d'étiquette d'identification (700) fixée à la surface extérieure du panneau avant (103)

14. Le luminaire pour étagère avec plaque d'identification éclairée selon l'une des revendications 1 à 13, dans lequel la plaque de guidage de lumière en forme de bande (200) est un disque de diffusion pourvu d'un agent de diffusion.

15. Le luminaire pour étagère avec étiquette d'identification éclairée selon l'une des revendications 1 à 14, dans lequel le couvercle de lampe (500) est un couvercle de lampe à diffusion.
